# FASCICULE DE BREVET EUROPEEN

(11) **EP 3 150 907 B1**
(45) Date de publication et mention de la délivrance du brevet: **14.11.2018**
(21) Numéro de dépôt: 16190373.7
(22) Date de dépôt: 23.09.2016
(51) Int. Cl.: F21S 43/00, F21V 8/00

(54) **DISPOSITIF OPTIQUE ET SYSTÈME DE SIGNALISATION ET/OU D'ÉCLAIRAGE POUR UN VÉHICULE AUTOMOBILE**
OPTISCHE VORRICHTUNG UND SYSTEM ZUR SIGNALISIERUNG UND/ODER BELEUCHTUNG FÜR KRAFTFAHRZEUG
OPTICAL DEVICE AND SIGNALLING AND/OR LIGHTING SYSTEM FOR A MOTOR VEHICLE

(30) Priorité: 30.09.2015 FR 1559313
(43) Date de publication de la demande: 05.04.2017
(73) Titulaire: VALEO ILUMINACION, 23600 Martos (ES)
(72) Inventeur: DE LAMBERTERIE, Antoine, 75019 PARIS (FR); SAGNA, Boubacar, 93012 BOBIGNY CEDEX (FR); MARTINEZ, Juan Manuel, 18014 GRANADA (ES); ROMO, Jesus, 23600 MARTOS (ES); DEL CARMEN MONTANO, Maria, 23600 MARTOS (ES)

(56) Documents cités:
- EP-A1- 2 261 083
- DE-A1-102013 104 169
- US-A1- 2004 066 659
- US-A1- 2009 185 389

## Description

La présente invention se rapporte à un dispositif optique et en particulier à un système d'éclairage et/ou de signalisation pour un véhicule automobile, le système étant équipé d'un tel dispositif.

Un feu indicateur de direction d'un véhicule automobile sert à faire savoir aux chauffeurs de véhicules voisins dans le trafic routier, que le chauffeur désire changer de direction. La bonne perception rapide du feu indicateur est un élément clé de la sécurité routière. Il est connu qu'un feu indicateur de direction est un feu qui émet un signal lumineux clignotant à lumière ambre ou rouge, le clignotement et la couleur étant choisis de façon à attirer rapidement l'attention d'un observateur vers le signal émis.

L'utilisation d'un feu indicateur de direction à défilement (« tracer light ») permet d'augmenter la perceptibilité d'un tel signal et d'accroître la sécurité routière. En effet, le Système Visuel Humain réagit rapidement à un mouvement perçu. En général, un défilement d'une lumière est perçu plus rapidement qu'un changement de couleur et encore plus rapidement qu'un clignotement.

L'utilisation de diodes électroluminescentes, LED, est de plus en plus préconisée dans le domaine des véhicules automobiles, afin de réaliser des fonctions lumineuses telles que les feux diurnes, feux de signalisation, ou par exemple les feux indicateurs de direction.

L'utilisation de guides de lumière afin de guider la lumière émise par une LED ou un groupe de LEDs est également une mesure qui trouve son application dans les dispositifs lumineux d'un véhicule automobile. Cette technique permet une grande liberté lors de la conception d'un projecteur, notamment au niveau de la disposition des LEDs, dont l'emplacement physique ne doit pas impérativement correspondre à l'emplacement des tâches lumineuses qu'elles sont destinées à produire. Un guide de lumière connu dans l'état de la technique peut être utilisé pour guider la lumière émise par une LED montée à un premier endroit vers un deuxième endroit différent. Alternativement, un guide de lumière en nappe peut être utilisé afin d'illuminer une bande, correspondant à la sortie du guide, de manière plus ou moins homogène à l'aide d'une ou de plusieurs LEDs.

De manière connue, on peut utiliser des guides de lumière placés le long d'une ligne pour réaliser un indicateur de direction à défilement. Chaque guide ou portion de guide correspond à un segment de l'indicateur de direction et l'allumage séquentiel des segments permet l'obtention d'un effet de défilement.

Il a été proposé, par exemple dans le document de brevet EP 2 541 128 d'utiliser une pluralité de guides de lumière au sein d'un même dispositif optique, afin de réaliser plusieurs fonctions lumineuses d'un dispositif d'éclairage ou de signalisation d'un véhicule automobile. L'intégration de plusieurs fonctions lumineuses, par exemple une fonction indicateur de direction à défilement et une fonction feux diurnes, permet d'une part de réduire l'encombrement dans l'espace restreint imposé par un feu de véhicule, et permet d'autre part de réaliser des signatures optiques intéressantes.

Dans la solution connue par EP 2 541 128, une fonction feux diurnes peut être réalisée par un guide de lumière cylindrique arrangé derrière une face de sortie d'un guide en nappe, qui peut implémenter une fonction indicateur de direction. L'intensité du flux lumineux apparent émis par le premier guide de lumière peut cependant être réduite par le passage des rayons émis à travers une partie du deuxième guide.

Le document de brevet DE 10 2013 104 169 propose de disposer un premier guide de lumière ayant une face de sortie cylindrique devant un guide en nappe. Dans cet arrangement, l'intensité du flux lumineux émis par le guide en nappe est réduite par le passage des rayons émis à travers une partie du premier guide.

DE 10.2013.104.169 divulgue un dispositif selon le préambule de la revendication 1. L'invention a pour objectif de pallier à au moins un des problèmes posés par l'art antérieur.

L'invention a pour objet un dispositif optique comprenant au moins un premier guide de lumière ayant une face de sortie. Le premier guide est configuré pour propager les rayons lumineux issus d'une première source lumineuse vers sa face de sortie. La face de sortie est disposée face à une zone de couplage faisant partie de la surface latérale d'un deuxième guide de lumière généralement tubulaire. Le deuxième guide de lumière comprend en outre une face de sortie opposée à la zone de couplage. Le deuxième guide est agencé de façon à propager les rayons lumineux entrant par ladite zone de couplage, ainsi que des rayons lumineux issus d'au moins une deuxième source lumineuse et entrant par au moins une des extrémités du tube, vers sa face de sortie. Le dispositif est remarquable en ce que le deuxième guide de lumière comprend au moins un tronçon dont la section droite comprend une portion ayant un contour elliptique.

De préférence, la portion elliptique peut comprendre la section droite de la face de sortie du deuxième guide.

Le contour de la section droite peut de préférence comprendre une portion en tronc de cône, dont la petite base correspond à la zone de couplage.

De manière préférée, le contour de la section droite du tronçon du deuxième guide peut être une ellipse.

Le tronçon et la face de sortie peuvent de préférence s'étendre sur toute la longueur du deuxième guide de lumière.

De préférence, le deuxième guide de lumière peut comprendre au moins un deuxième tronçon dont une section comprend une portion ayant un contour elliptique.

Le ou les premiers guides de lumière peuvent préférentiellement chacun comprendre une zone de propagation principale en forme de nappe.

De préférence, la direction longitudinale du deuxième guide peut être sensiblement perpendiculaire à la direction de propagation des rayons lumineux dans la zone de propagation principale du ou des premiers guides.

L'épaisseur combinée des faces de sortie des premiers guides de lumière peut de préférence être supérieure ou égale à l'épaisseur correspondante de la zone de couplage du deuxième guide.

L'invention a également pour objet un système d'éclairage pour un véhicule automobile comprenant une première source lumineuse et une deuxième source lumineuse. Le système est remarquable en ce qu'il comprend un dispositif conforme à l'invention.

La deuxième source lumineuse peut de préférence comprendre une paire de diodes électroluminescentes, chacune à une extrémité du deuxième guide.

De préférence la première source lumineuse peut être configurée pour émettre un flux de feu clignotant de changement de direction.

Le flux de feu clignotant peut préférentiellement être un flux de feux de clignotant défilant.

La deuxième source lumineuse peut de préférence être configurée pour émettre un flux d'éclairage de jour.

Selon les mesures de l'invention, un dispositif optique à deux types de guides de lumière distincts est utilisé pour réaliser un système d'éclairage implémentant deux fonctions de signalisation ou d'éclairage distinctes d'un véhicule automobile. Comme le premier guide en nappe, qui réalise de préférence la fonction lumineuse indicateur de direction à défilement, est disposé derrière le deuxième guide tubulaire, qui réalise de préférence la fonction feux diurnes, l'encombrement est réduit par rapport à une disposition classique dans laquelle les deux types de guides sont disposés côte à côte. Par rapport à des solutions connues ayant des arrangements similaires mais ayant recours à des guides tubulaires à section droite circulaire, grâce au profil elliptique du guide tubulaire selon l'invention l'intensité lumineuse perçue du deuxième guide en nappe, transmise à travers le guide tubulaire, est nettement augmentée. Dans une comparaison du dispositif selon l'invention à un dispositif semblable mais ayant un deuxième guide cylindrique, une augmentation du flux lumineux perçu issu du premier guide en nappe d'environ 30 % a pu être mesurée.

D'autres caractéristiques et avantages de la présente invention seront mieux compris à l'aide de la description exemplaire et des dessins parmi lesquels :
- la figure 1 représente une vue schématique d'une section droite transversale du dispositif selon un mode de réalisation préféré de l'invention ;
- la figure 2 représente une vue schématique d'une section droite transversale du dispositif selon un mode de réalisation préféré de l'invention ;
- la figure 3 représente une vue schématique en perspective du dispositif selon une mode de réalisation préféré de l'invention ;
- la figure 4 représente une vue schématique d'une section droite transversale du dispositif selon un mode de réalisation préféré de l'invention.

Dans la description qui suit, des numéros de référence similaires seront utilisées pour décrire des concepts similaires à travers des modes de réalisation différents de l'invention. Ainsi, les numéros 100, 200 décrivent un dispositif optique dans deux modes de réalisation différents conformes à l'invention.

Sauf indication spécifique du contraire, des caractéristiques techniques décrites en détail pour un mode de réalisation donné peuvent être combinés aux caractéristiques techniques décrites dans le contexte d'autres modes de réalisation décrits à titre exemplaire et non limitatif.

D'une manière générale, l'invention peut utiliser des sources lumineuses du type diode électroluminescente, LED. Les LEDs comprennent de façon connue un élément semiconducteur apte à émettre de la lumière d'une couleur prédéterminée lorsqu'il est parcouru par un courant d'une intensité prédéterminée. Dans la description qui suit, une source lumineuse peut décrire un ensemble de sources élémentaires qui sont utilisées pour réaliser une seule fonction lumineuse, chaque source élémentaire étant à titre exemplaire une LED.

Le dispositif optique selon l'invention tire profit des techniques connues en ce qui concerne les guides de lumière permettant la propagation de rayons lumineux émis par une source de lumière à travers le milieu constituant le guide. Par exemple, les premiers et deuxième guides qui seront décrits peuvent être réalisés à partir de matériaux tels que le polyméthacrylate de méthyle, PMMA, le polycarbonate, PC, la silicone ou d'autres matériaux ayant de préférence un indice de réfraction compris entre 1,49 et 1,59.

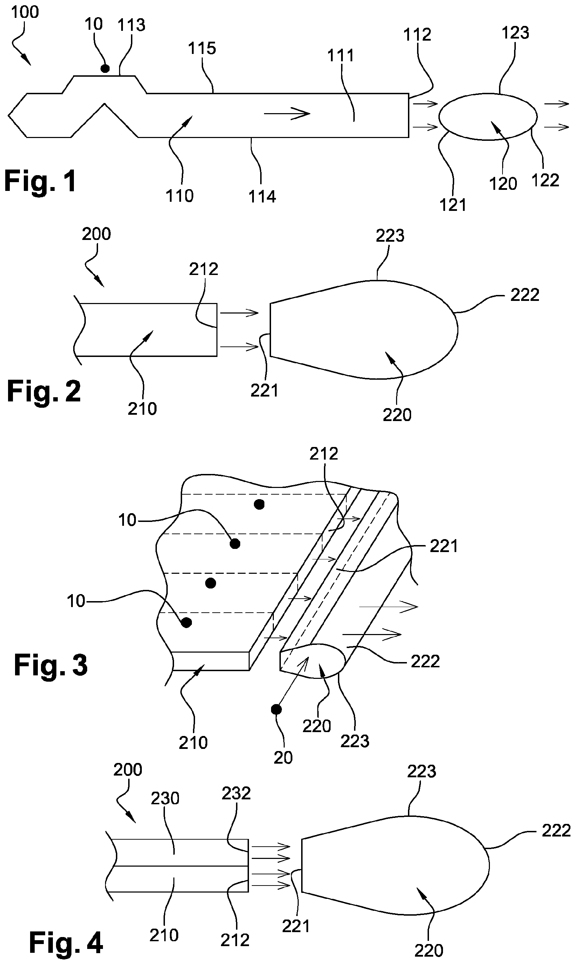

La figure 1 montre une illustration d'un premier mode de réalisation du dispositif optique 100 selon l'invention. Le dispositif comprend un premier guide de lumière 110 ayant une face de sortie 112. Le premier guide est configuré pour propager les rayons lumineux issus d'une première source lumineuse 10 vers sa face de sortie 112. La face de sortie est disposée face à une zone de couplage 121 qui fait partie de la surface latérale d'un deuxième guide de lumière 120 à géométrie généralement tubulaire. Au moins une partie de rayons de lumière émis par le premier guide 110 à travers la face de sortie 112 entre dans le deuxième guide 120 à travers la zone de couplage 121.

Le deuxième guide de lumière 120 est un guide tubulaire constitué par un corps essentiellement allongé. Il comprend également une face de sortie 122, opposée à sa zone de couplage 121. Le deuxième guide 120 est agencé de manière à propager les rayons lumineux entrant dans le guide par ladite zone de couplage 121, ainsi que des rayons lumineux issus d'au moins une deuxième source lumineuse non illustrée et entrant par au moins une des extrémités du tube, vers sa face de sortie 122. Comme indiqué par l'illustration de la figure 1, le deuxième guide de lumière 120 comprend au moins un tronçon dont la section droite 123 comprend une portion de contour elliptique. En l'occurrence, l'illustration montre l'exemple non limitatif dans lequel la section droite 123 est une ellipse. Le grand axe de l'ellipse est généralement aligné sur l'étendue longitudinale du premier guide 110. Les faces de couplage 121 et de sortie 122 sont des parties opposées de la surface latérale du tube 120. Le tronçon ayant la section droite à contour conforme à l'invention peut représenter une partie de l'étendue du tube 120 ou, de manière alternative, il peut constituer l'intégralité du tube 120. Dans ce dernier cas, toutes les sections droites du guide tubulaire 120 présentent un contour ayant au moins une portion elliptique. De préférence, la partie elliptique correspond à l'emplacement de la face de sortie 122 du guide 120.

Un mode de réalisation préféré du premier guide de lumière 110 est détaillé sur l'illustration de la figure 1. La coupe transversale suit la direction de propagation des rayons dans une zone de propagation principale 111 du guide. Le guide 110 comprend une face d'entrée 113 par laquelle les rayons lumineux issus d'une première source lumineuse 10 sont admis. A partir de la face d'entrée 113, les rayons suivent un chemin d'abord orienté principalement suivant l'épaisseur du guide de lumière 110 et subissent au moins une réflexion sur une surface de réflexion pour diriger les rayons réfléchis dans la zone de propagation principale 111 pour sortir du guide par la face de sortie 112. Au moins la zone de propagation principale 111 forme une nappe de guidage ayant une plus faible épaisseur par rapport à sa longueur et pouvant être incurvé pour adopter un galbe donné.

La zone de propagation 111 est délimitée verticalement par une face de guidage supérieure 115 et une face de guidage inférieure 114. Les deux faces de guidage 114, 115 sont de préférence parallèles et espacées de manière que la zone 111 présente une épaisseur verticale constante qui est faible par rapport à ses dimensions longitudinale et transversale. L'invention laisse toute liberté de forme et de dimensions pour la nappe et une grande liberté de conception du premier guide de lumière 110 pour l'adapter à la fonction lumineuse à réaliser par l'intermédiaire de la première source lumineuse 10.

L'emploi d'un deuxième guide de type tubulaire permet de disposer une partie de la deuxième source lumineuse à une extrémité du guide 120 et avantageusement de disposer deux sources élémentaires de la deuxième source chacune à une extrémité du guide. L'emploi d'un guide tubulaire comme le deuxième guide de lumière 120 permet de l'orienter sensiblement transversalement à la nappe constituant la zone de propagation principale 111 du premier guide 110.

La figure 2 montre un deuxième mode de réalisation du dispositif 200 selon l'invention. Le premier guide 210 est essentiellement similaire au guide 110 qui a été décrit. Le deuxième guide 220 de géométrie généralement tubulaire présente une zone de couplage 221 généralement plane face à la face de sortie 212 du premier guide. La disposition relative des guides 210, 220 est telle qu'au moins une partie des rayons lumineux émis par la face de sortie 212 entrent dans le guide 220 à travers cette zone de couplage. La géométrie plane de la zone de couplage 221 favorise l'entrée des rayons dans le guide. La section illustrée du guide 220 est une section droite. La partie du contour 223 de la section qui correspond à la zone de couplage 221 forme la petite base d'un tronc de cône qui s'agrandit en direction de la face de sortie 222. Du côté de la face de sortie 222, le contour 223 présente une portion elliptique. De manière connue, la zone de couplage peut servir de base pour des prismes réfléchissants disposés à l'intérieur du guide 220 et aptes à dévier les rayons lumineux qui se propagent dans le milieu du guide vers la face de sortie 222. La zone de couplage 221 se situe au voisinage d'un des foyers de l'ellipse définissant la face de sortie 222, ledit voisinage étant défini par la taille des prismes réfléchissants, usuellement inférieure à 2mm.

La figure 3 reprend le mode de réalisation de la figure 2 dans un vue schématique en perspective. Il est apparent que le premier guide 210 comprend une pluralité de segments semblables le long d'une direction perpendiculaire à la direction de propagation principale du guide 210. Il peut également s'agir d'une pluralité de guides équivalents disposés en rangée. De manière connue, les segments peuvent par exemple être illuminés par le biais des premières sources lumineuses 10 de manière séquentielle pour réaliser une fonction lumineuse à défilement. La deuxième source lumineuse 20 sert à illuminer le deuxième guide 220. Les rayons lumineux issus de la source 20 entrent dans le guide 220 par une extrémité de la structure tubulaire pour y être propagés et dirigés vers la face de sortie 222. Bien que l'exemple illustré montre des étendues essentiellement droites de guides 210, 220 ces guides peuvent présenter des courbures selon un galbe donné sans sortir du cadre de la présente invention.

L'épaisseur de la nappe de guidage 210 est de préférence supérieure ou égale à l'épaisseur correspondante de la zone de couplage 221 du deuxième guide 220. Dans le mode de réalisation alternatif illustré par la figure 4, deux nappes de guidage ou premiers guides 210, 230 sont disposées sur deux rangées superposées. Dans ce cas, l'épaisseur combinée des nappes de guidage 210, 230 est de préférence supérieure ou égale à l'épaisseur correspondante de la zone de couplage 221 du deuxième guide 220. La disposition est telle que les faces de sortie 212, 232 font face à la zone de couplage 221. Evidemment, une pluralité plus importante de premiers guides peuvent être superposés sans pour autant sortir du contexte de l'invention.

Lorsque les premiers et deuxièmes guides présentent des portions courbes, le deuxième guide, disposé en parallèle par rapport à la face de sortie du premier guide, comprend de préférence au moins un tronçon ayant une section transversale arbitraire qui correspond au contour elliptique qui vient d'être décrit. Le plan dans lequel le contour elliptique se situe est calculé à l'aide de moyens de simulations optiques de manière connue et de façon à orienter les rayons lumineux qui sont émis par la face de sortie du deuxième guide de lumière tubulaire dans une même direction, indépendamment du tronçon droit ou courbe de la structure tubulaire, en tenant compte notamment des réfractions engendrées par chaque interface courbe, qui dépendent de la courbure locale et des indices optiques de guides.

De préférence, le dispositif selon l'invention trouve son application dans un dispositif lumineux pour un véhicule automobile. Il peut par exemple s'agir d'un dispositif de signalisation tel qu'un feu diurne avec indicateur de direction défilant intégré. Un exemple est donné en référence au dispositif optique de la figure 3. Un dispositif lumineux d'un véhicule automobile comprend de manière connue des moyens de pilotage de l'alimentation électrique des sources lumineuses ou LEDs 10, 20. Les moyens de pilotage de l'alimentation électrique comprennent en général un élément convertisseur apte à convertir un courant électrique d'une première intensité, fourni par une source de courant interne du véhicule telle qu'une batterie, en un courant de charge d'une deuxième intensité différente, apte à alimenter les LEDs 10, 20 montées en charge de l'élément convertisseur.

Un élément microcontrôleur peut de manière connue être utilisé pour programmer l'alimentation sélective et/ou séquentielle de la pluralité des premières sources lumineuses 10. Ainsi, un feu indicateur de direction à défilement peut être réalisé. Les différents segments de la face de sortie 212 du guide 210 sont illuminés si les sources lumineuses 10 y associées sont alimentées de manière adéquate. La lumière émise par chacun des segments de la face de sortie 212 est transmise à travers le deuxième guide 220 et sa face de sortie 222. Lorsque les deuxièmes sources lumineuses 20 sont alimentées, le guide tubulaire 220 est illuminé sur toute sa longueur et les rayons lumineux sont émis par la face de sortie 222.

## Revendications

1. Dispositif optique (100) comprenant au moins un premier guide de lumière (110) ayant une face de sortie (112), le premier guide étant configuré pour propager les rayons lumineux issus d'une première source lumineuse vers sa face de sortie (112), la face de sortie étant disposée face à une zone de couplage (121) faisant partie de la surface latérale d'un deuxième guide de lumière (120) généralement tubulaire,
dans lequel le deuxième guide de lumière (120) comprend en outre une face de sortie (122) opposée à la zone de couplage (121), le deuxième guide étant agencé de façon à propager les rayons lumineux entrant par ladite zone de couplage (121), ainsi que des rayons lumineux issus d'au moins une deuxième source lumineuse et entrant par au moins une des extrémités du tube, vers sa face de sortie (122), **caractérisé en ce que** le deuxième guide de lumière (120) comprend au moins un tronçon dont la section droite (123) comprend une portion ayant un contour elliptique.

2. Dispositif selon la revendication 1, **caractérisé en ce que** la portion elliptique comprend la section droite de la face de sortie (122) du deuxième guide (120).

3. Dispositif selon une des revendications 1 ou 2, **caractérisé en ce que** le contour de la section droite (123) comprend une portion en tronc de cône, dont la petite base correspond à la zone de couplage (121).

4. Dispositif selon la revendication 1, **caractérisé en ce que** le contour de la section droite (123) du tronçon du deuxième guide (120) est une ellipse.

5. Dispositif selon une des revendications 1 à 4, **caractérisé en ce que** le tronçon et la face de sortie (122) s'étendent sur toute la longueur du deuxième guide de lumière (120).

6. Dispositif selon une des revendications 1 à 4, **caractérisé en ce que** le deuxième guide de lumière (120) comprend au moins un deuxième tronçon dont une section comprend une portion ayant un contour elliptique.

7. Dispositif selon une des revendications 1 à 6, **caractérisé en ce que** le ou les premiers guides de lumière comprennent chacun une zone de propagation principale en forme de nappe.

8. Dispositif selon la revendication 7, **caractérisé en ce que** la direction longitudinale du deuxième guide est sensiblement perpendiculaire à la direction de propagation des rayons lumineux dans la zone de propagation principale du ou des premiers guides.

9. Dispositif selon une des revendications 1 à 8, **caractérisé en ce que** l'épaisseur combinée des faces de sortie des premiers guides de lumière est supérieure ou égale à l'épaisseur correspondante de la zone de couplage (121) du deuxième guide (120).

10. Système d'éclairage pour un véhicule automobile, comprenant une première source lumineuse, une deuxième source lumineuse, et **caractérisé en ce qu'**il comprend un dispositif selon une des revendications 1 à 9.

11. Système selon la revendication 10, **caractérisé en ce que** la deuxième source lumineuse comprend une paire de diodes électroluminescentes, chacune à une extrémité du deuxième guide (120):

12. Système selon une des revendications 10 ou 11, **caractérisé en ce que** la première source lumineuse est configurée pour émettre un flux de feu clignotant de changement de direction.

13. Système selon la revendication 12, **caractérisé en ce que** le flux de feu clignotant est un flux de feux de clignotant défilant.

14. Système selon une des revendications 10 à 13, **caractérisé en ce que** la deuxième source lumineuse est configurée pour émettre un flux d'éclairage de jour.

## Patentansprüche

1. Optische Vorrichtung (100), die mindestens einen ersten Lichtleiter (110) enthält, der eine Ausgangsseite (112) hat, wobei der erste Leiter konfiguriert ist, die von einer ersten Lichtquelle kommenden Lichtstrahlen zu seiner Ausgangsseite (112) auszubreiten, wobei die Ausgangsseite gegenüber einer Kopplungszone (121) angeordnet ist, die Teil der Seitenfläche eines allgemein rohrförmigen zweiten Lichtleiters (120) ist,
wobei der zweite Lichtleiter (120) außerdem eine Ausgangsseite (122) entgegengesetzt zur Kopplungszone (121) enthält, wobei der zweite Leiter so eingerichtet ist, dass er die durch die Kopplungszone (121) eintretenden Lichtstrahlen sowie von mindestens einer zweiten Lichtquelle kommende und durch mindestens eines der Enden des Rohrs eintretende Lichtstrahlen zu seiner Ausgangsseite (122) ausbreitet, **dadurch gekennzeichnet, dass** der zweite Lichtleiter (120) mindestens einen Abschnitt enthält, dessen Querschnitt (123) einen Teil enthält, der einen elliptischen Umriss hat.

2. Vorrichtung nach Anspruch 1, **dadurch gekennzeichnet, dass** der elliptische Teil den Querschnitt der Ausgangsseite (122) des zweiten Leiters (120) enthält.

3. Vorrichtung nach einem der Ansprüche 1 oder 2, **dadurch gekennzeichnet, dass** der Umriss des Querschnitts (123) einen kegelstumpfförmigen Teil hat, dessen kleine Basis der Kopplungszone (121) entspricht.

4. Vorrichtung nach Anspruch 1, **dadurch gekennzeichnet, dass** der Umriss des Querschnitts (123) des Abschnitts des zweiten Leiters (120) eine Ellipse ist.

5. Vorrichtung nach einem der Ansprüche 1 bis 4, **dadurch gekennzeichnet, dass** der Abschnitt und die Ausgangsseite (122) sich über die ganze Länge des zweiten Lichtleiters (120) erstrecken.

6. Vorrichtung nach einem der Ansprüche 1 bis 4, **dadurch gekennzeichnet, dass** der zweite Lichtleiter (120) mindestens einen zweiten Abschnitt enthält, von dem ein Querschnitt einen Teil mit einem elliptischen Umriss enthält.

7. Vorrichtung nach einem der Ansprüche 1 bis 6, **dadurch gekennzeichnet, dass** der erste oder die ersten Lichtleiter je eine flächenförmige Hauptausbreitungszone enthalten.

8. Vorrichtung nach Anspruch 7, **dadurch gekennzeichnet, dass** die Längsrichtung des zweiten Leiters im Wesentlichen lotrecht zur Ausbreitungsrichtung der Lichtstrahlen in der Hauptausbreitungszone des oder der ersten Leiter ist.

9. Vorrichtung nach einem der Ansprüche 1 bis 8, **dadurch gekennzeichnet, dass** die kombinierte Dicke der Ausgangsseiten der ersten Lichtleiter größer als die oder gleich der entsprechenden Dicke der Kopplungszone (121) des zweiten Leiters (120) ist.

10. Beleuchtungssystem für ein Kraftfahrzeug, das eine erste Lichtquelle und eine zweite Lichtquelle enthält und **dadurch gekennzeichnet ist, dass** es eine Vorrichtung nach einem der Ansprüche 1 bis 9 enthält.

11. System nach Anspruch 10, **dadurch gekennzeichnet, dass** die zweite Lichtquelle ein Paar Elektrolumineszenzdioden enthält, jede an einem Ende des zweiten Leiters (120).

12. System nach einem der Ansprüche 10 oder 11, **dadurch gekennzeichnet, dass** die erste Lichtquelle konfiguriert ist, einen Richtungswechsel-Blinklichtstrom zu emittieren.

13. System nach Anspruch 12, **dadurch gekennzeichnet, dass** der Blinklichtstrom ein Lauflicht-Blinklichtstrom ist.

14. System nach einem der Ansprüche 10 bis 13, **dadurch gekennzeichnet, dass** die zweite Lichtquelle konfiguriert ist, einen Tagesfahrlichtstrom zu emittieren.

## Claims

1. Optical device (100) comprising at least one first light guide (110) having an exit face (112), the first guide being configured to propagate the light rays emitted by a first light source toward its exit face (112), the exit face being placed facing a coupling zone (121) forming part of the lateral surface of a generally tubular second light guide (120),
in which device the second light guide (120) furthermore comprises an exit face (122) opposite the coupling zone (121), the second guide being arranged so as to propagate the light rays entering via said coupling zone (121), and light rays emitted by at least one second light source and entering via at least one of the ends of the tube, toward its exit face (122),
**characterized in that** the second light guide (120) comprises at least one segment the cross section of which (123) comprises a portion having an elliptical outline.

2. Device according to Claim 1, **characterized in that** the elliptical portion comprises the cross section of the exit face (122) of the second guide (120).

3. Device according to either of Claims 1 and 2, **characterized in that** the outline of the cross section (123) comprises a frustoconical portion, the small base of which corresponds to the coupling zone (121).

4. Device according to Claim 1, **characterized in that** the outline of the cross section (123) of the segment of the second guide (120) is an ellipse.

5. Device according to one of Claims 1 to 4, **characterized in that** the segment and the exit face (122) extend the entire length of the second light guide (120).

6. Device according to one of Claims 1 to 4, **characterized in that** the second light guide (120) comprises at least one second segment, a section of which comprises a portion having an elliptical outline.

7. Device according to one of Claims 1 to 6, **characterized in that** the first light guide(s) each comprise a slab-shaped main propagation zone.

8. Device according to Claim 7, **characterized in that** the longitudinal direction of the second guide is substantially perpendicular to the propagation direction of the light rays in the main propagation zone of the first guide(s).

9. Device according to one of Claims 1 to 8, **characterized in that** the combined thickness of the exit faces of the first light guides is larger than or equal to the corresponding thickness of the coupling zone (121) of the second guide (120).

10. Lighting system for an automotive vehicle, comprising a first light source and a second light source, and **characterized in that** it comprises a device according to one of Claims 1 to 9.

11. System according to Claim 10, **characterized in that** the second light source comprises a pair of light-emitting diodes, each at one end of the second guide (120).

12. System according to either of Claims 10 and 11, **characterized in that** the first light source is configured to emit a flashing turn-signal light flux.

13. System according to Claim 12, **characterized in that** the flashing light flux is a sequential turn-signal light flux.

14. System according to one of Claims 10 to 13, **characterized in that** the second light source is configured to emit a daytime running flux.
